# EUROPÄISCHE PATENTSCHRIFT

(11) **EP 3 126 711 B1**
(45) Veröffentlichungstag und Bekanntmachung des Hinweises auf die Patenterteilung: **17.07.2019**
(21) Anmeldenummer: 15718434.2
(22) Anmeldetag: 19.03.2015
(51) Int. Cl.: F16H 3/00, F16H 3/089

(54) **DOPPELKUPPLUNGSGETRIEBE**
DOUBLE CLUTCH GEARBOX
BOÎTE DE VITESSES À DOUBLE EMBRAYAGE

(30) Priorität: 02.04.2014 DE 102014206303
(43) Veröffentlichungstag der Anmeldung: 08.02.2017
(60) Teilanmeldung: 17176774.2
(73) Patentinhaber: Schaeffler Technologies AG & Co. KG, 91074 Herzogenaurach (DE)
(72) Erfinder: MÜLLER, Bruno, 77880 Sasbach (DE); MÁN, Lászlo, 77833 Ottersweier-Unzhurst (DE); GREB, Peter, 77833 Ottersweier (DE)
(86) Internationale Anmeldenummer: PCT/DE2015/200171
(87) Internationale Veröffentlichungsnummer: WO 2015/149786

(56) Entgegenhaltungen:
- EP-A1- 2 385 270
- CN-A- 101 255 904
- DE-A1- 19 807 374
- DE-A1-102004 055 121
- DE-A1-102011 104 278
- US-A1- 2013 109 530
- US-B2- 8 652 005

## Beschreibung

Die Erfindung betrifft ein Getriebe, insbesondere für Kraftfahrzeuge.

Getriebe für Kraftfahrzeuge sind im Stand der Technik vielfältig bekannt. So sind so genannte Handschaltgetriebe bekannt, bei welchen die Getriebeeingangswelle von einer Kupplung mit der Kurbelwelle eines Antriebsmotors verbindbar ist, wobei weiterhin eine Ausgangswelle vorgesehen ist und wobei zwischen der Eingangswelle und der Ausgangswelle eine Mehrzahl von Zahnradpaaren angeordnet sind, wobei mittels eines Schalthebels eines der Zahnradpaare auswählbar ist. Bei diesen Zahnradpaaren ist meist eines der beiden Zahnräder ein Festrad, welches mit der Welle fest verbunden ist und das andere Zahnrad ist ein Losrad, welches auf der Welle frei drehbar ist, wobei dieses Zahnrad mittels eines Verriegelungsmechanismus mit der Welle auch drehfest verbindbar ist. Dies kann auch mittels des Schalthebels erfolgen, was man auch das Einlegen einer Übersetzungsstufe nennt. Die Kupplung wird dabei in der Regel mittels eines Pedals fußbetätigt ein- oder ausgerückt.

Auch sind so genannte automatisierte Schaltgetriebe bekannt geworden, bei welchen die Betätigung des Schaltgetriebes, wie oben beschrieben, mittels eines Aktuators automatisiert betätigt wird. Auch die Kupplung wird dabei mittels eines Aktuators automatisiert betätigt.

Der Nachteil dieser Getriebe ist, dass bei einem Wechsel eines Übersetzungsverhältnisses eine Zeitphase vorliegt, in welcher kein Übersetzungsverhältnis eingelegt vorliegt und damit kein Antriebsmoment anliegt. Es kann also nicht zugkraftunterbrechungsfrei geschaltet werden.

Aus diesem Grund sind so genannte Doppelkupplungsgetriebe bekannt geworden, bei welchen eine zugkraftunterbrechungsfreie Änderung des Übersetzungsverhältnisses möglich ist. Solche Getriebe können mittels Aktuatoren betätigt werden, welche sowohl das Wählen des Übersetzungsverhältnisses als auch das Ein- oder Auslegen eines Übersetzungsverhältnisses als auch die Betätigung der Kupplungen erlaubt. Diese Getriebe weisen zwei Getriebeeingangswellen auf, die mittels zweier Kupplungen mit einer Kurbelwelle eines Antriebsmotors verbindbar sind. Auch weisen diese Getriebe eine ausgangswelle auf, wobei eine Mehrzahl von Zahnradpaaren zwischen den beiden Eingangswellen und der Ausgangswelle angeordnet sind, so dass ein Übersetzungsverhältnis für jede Eingangswelle gleichzeitig eingelegt werden kann, wenn nicht gleichzeitig beide der Kupplungen eingerückt sind. Bei einem Wechsel des Übersetzungsverhältnisses ist dann nur ein Ausrücken der einen Kupplung und ein im Wesentlichen gleichzeitiges Einrücken der anderen Kupplung notwendig.

Aus der DE 10 2004 055 121 A1 offenbart die Merkmale des Oberbegriffs des Anspruchs 1, und ist dabei eine Doppelkupplung bekannt, bei der auf der einen Eingangswelle die Zahnräder, die für die ungeraden Gänge verwendet werden und auf der anderen Eingangswelle die Zahnräder, welche für die geraden Gänge und den Rückwärtsgang verantwortlich sind bereitgestellt sind.

Eine vorteilhafte Betätigungsvorrichtung ist beispielsweise durch die ältere Anmeldung DE 10 2013 221 058 der Anmelderin bekannt geworden. Dabei wird eine Betätigungsvorrichtung mit zwei Walzenanordnungen beschrieben, wobei die Betätigung der Übersetzungsverhältnisse mittels Schaltgabeln erfolgt, welche mit Kontaktelementen in Nuten der Walzenanordnungen eingreifen, wobei ein Wechsel einer Nut in eine andere Nut drehrichtungsabhängig durchgeführt wird.

Dabei hat sich bei Getrieben nach dem Stand der Technik heraus gestellt, dass die Schallgeschwindigkeiten beim Hochschalten und beim Herunterschalten der Übersetzungsverhältnisse unterschiedlich sind. Dadurch ergeben sich unterschiedliche Schaltzeiten, die bei dynamischen Schaltvorgängen als eher ungenügend bezeichnet werden könnten, während sich schnelle Schaltvorgänge bei ausgewählten Übersetzungswechseln ergeben, wenn die Dynamik weniger notwendig erscheint.

Es ist die Aufgabe der Erfindung, ein Getriebe zu schaffen, welches im Vergleich zum Stand der Technik insbesondere in Bezug auf die Übersetzungswechseldynamik verbessert ist.

Die Aufgabe der Erfindung mit den Merkmalen von Anspruch 1 gelöst.

Ein Ausführungsbeispiel der Erfindung betrifft ein Getriebe mit einer ersten Eingangswelle und mit einer zweiten Eingangswelle, mit einer Ausgangswelle, mit einer ersten Kupplung und mit einer zweiten Kupplung, wobei jede der Eingangswellen mit einer der Kupplungen mit der Kurbelwelle eines Antriebsmotors verbindbar ist, wobei jeder der Eingangswellen mittels Zahnradpaaren mit der Ausgangswelle drehmomentübertragend verbindbar ist, wobei Gruppen von zwei Zahnradpaaren jeweils mittels einer betätigbaren Schaltgabel mit der Ausgangswelle drehmomentübertragend verbindbar sind, wobei jedem Zahnradpaar eine Übersetzungsstufe zugeordnet wird, wobei eine Anzahl von relativ zueinander abgestuften Übersetzungsstufen vorgesehen sind, wobei die beiden Übersetzungsstufen einer Gruppe von Zahnradpaaren eine erste Übersetzungsstufe (N) und ihre übernächste Übersetzungsstufe (N+2) sind, mit N einer ganzen Zahl, insbesondere N = 1, 2, 3, 4 oder 5 etc. Dadurch wird erreicht, dass bei einer Rückschaltung über zwei Übersetzungsstufen, also beispielsweise von Übersetzungsstufe 3 zu Übersetzungsstufe 1 und/oder von Übersetzungsstufe 4 zu Übersetzungsstufe 2 und/oder von Übersetzungsstufe 5 zu Übersetzungsstufe 3 und/oder von Übersetzungsstufe 6 zu Übersetzungsstufe 4 und/oder von Übersetzungsstufe 7 zu Übersetzungsstufe 5 etc. keine komplexen Schaltvorgänge durchgeführt werden müssen, weil die Rückschaltung mit einer Schaltgabel betätigt wird. Dadurch wird insbesondere bei dynamisch relevanten Schaltvorgängen eine kurze Schaltzeit erreicht.

Dabei ist es besonders vorteilhaft, wenn die Übersetzungsstufen einer Eingangswelle zwei Gruppen von Zahnradpaare aufweisen, wobei diese Zahnradpaare die Übersetzungsstufen N, N+2, N+4 und N+6 umfassen, mit N einer ganzen Zahl, insbesondere N = 1, 2 oder 3. Dadurch können auch Rückschaltungen von Übersetzungsstufe N zur Übersetzungsstufe N-4 besonders schnell durchgeführt werden.

Erfindungsgemäß ist vorgesehen, dass die Übersetzungsstufen einer Eingangswelle zwei Gruppen von Zahnradpaaren aufweisen, wobei diese Zahnradpaare die Übersetzungsstufen 1, 3, 5 und 7 umfassen.

Die Übersetzungsstufen einer ersten Eingangswelle weisen zwei Gruppen von Zahnradpaare auf, wobei diese Zahnradpaare die Übersetzungsstufen 1 und 3 in einer Gruppe sowie 5 und 7 in einer anderen Gruppe umfassen.

Die Übersetzungsstufen einer ersten Eingangswelle weisen zwei Gruppen von Zahnradpaare auf, wobei diese Zahnradpaare die Übersetzungsstufen 2, 4 und 6 umfassen.

Dabei sind die Übersetzungsstufen des Rückwärtsgangs R einem der Zahnradpaare zugeordnet.

Die Übersetzungsstufen einer zweiten Eingangswelle weisen zwei Gruppen von Zahnradpaaren auf, wobei diese Zahnradpaare die Übersetzungsstufen R und 2 in einer ersten Gruppe sowie 4 und 6 in einer anderen Gruppe umfassen.

Hierbei sind die Übersetzungsstufen 3 und 5, bzw. 2 und 4 der einzelnen Gruppen jeweils benachbart zueinander auf der jeweiligen Eingangswelle angeordnet. Auf diese Weise weisen auch diese Schaltvorgänge von 4 auf 2 und 5 auf 3 entsprechend kurze Schaltzeiten auf.

Hierbei sind die Zahnradpaare zumindest einer der Eingangswellen oder aller Eingangswellen paarweise mittels einer Schaltgabel betätigt werden, wobei die Schaltgabeln einer Eingangswelle jeweils mit einer Schaltwalze betätigt werden.

Erfindungsgemäß ist es auch vorteilhaft, wenn für die Betätigung der Zahnradpaare einer Eingangswelle jeweils eine Schaltwalze vorgesehen ist, wobei bei zwei Eingangswellen und deren zugeordnete Zahnradpaare zwei Schaltwalzen vorgesehen sind zur Betätigung des Getriebes.

Dabei ist es besonders vorteilhaft, wenn die Schaltwalzen jeweils von einem Elektromotor angetrieben werden. So kann eine schnelle und energieeffiziente Betätigung des Getriebes erfolgen.

Die vorliegende Erfindung wird nachfolgend anhand bevorzugter Ausführungsbeispiele in Verbindung mit den zugehörigen Figuren näher erläutert:
Dabei zeigen:
- Figur 1: eine schematische Ansicht eines Getriebes nach dem Stand der Technik, und
- Figur 2: eine schematische Ansicht eines erfindungsgemäßen Getriebes, und
- Figur 3: eine Ansicht eines Ausschnitts eines erfindungsgemäßen Getriebes.

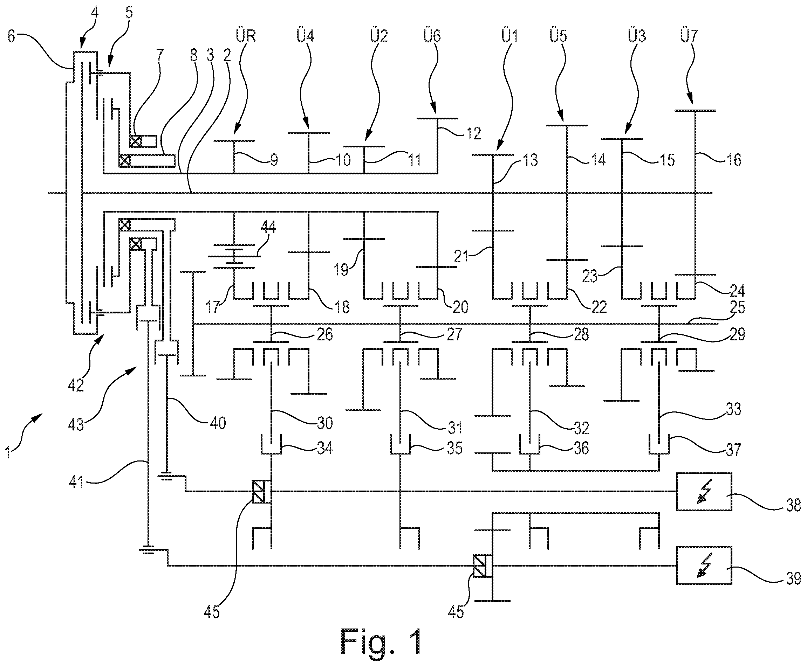

Die Figur 1 zeigt in einer schematischen Darstellung ein Getriebe 1 nach dem Stand der Technik. Das Getriebe 1 weist eine erste Eingangswelle 2 und eine zweite Eingangswelle 3 auf, die über die Kupplungen 4, 5 mit einer nicht dargestellten Kurbelwelle eins Antriebsmotors verbindbar sind. Die Kupplungen 4, 5 sind in einem Kupplungsgehäuse 6 angeordnet, welches mit der Kurbelwelle verbindbar ist. Zur Betätigung der Kupplungen 4, 5 sind Betätigungsvorrichtungen 7, 8 vorgesehen, welche von einer Steuereinheit ansteuerbar sind, um die eine Kupplung 4 und/oder die andere Kupplung 5 betätigen zu können. Die Eingangswellen 2, 3 sind zumindest bereichsweise koaxial zueinander angeordnet, wobei auch die Betätigungsvorrichtungen 7, 8 bevorzugt koaxial zueinander angeordnet sind. Mit den beiden Eingangswellen 2, 3 sind Zahnräder 9, 10, 11, 12, 13, 14, 15, 16 von Zahnradpaaren 9/17; 10/18; 11/19; 12/20; 13/21; 14/22; 15/23 und 16/24 drehfest verbunden. Dabei sind die Zahnräder 9, 10, 11 und 12 mit der Welle 3 und die Zahnräder 13, 14, 15 und 16 mit der Welle 2 drehfest verbunden.

Mit der parallel zu den Eingangswellen 2, 3 angeordneten Ausgangswelle 25 sind die Zahnräder 17, 18, 19, 20, 21, 22, 23, 24 über Schiebemuffen 26, 27, 28 und 29 verbindbar. Dazu sind die Schiebemuffen 26, 27, 28 und 29 über Schaltgabeln 30, 31, 32 und 33 axial verlagerbar, wobei die Schaltgabeln 30, 31, 32 und 33 dabei in die eine oder in die andere Richtung zu verlagern sind. Die Verlagerung der Schaltgabeln 30, 31, 32 und 33 erfolgt über die Walzenelemente 34, 35, 36 und 37, wobei diese von Antriebsmotoren 38, 39 verdreht werden können.

Auch können über die Antriebsmotoren 38, 39 Kolben 40, 41 von Kolben-Zylindereinheiten 42, 43 betätigt werden, um die Kupplungen 4, 5 betätigen zu können.

Die Anordnung der Übersetzungsstufen Ü ist dabei wie folgt:
Das Zahnradpaar 13/21 ist der ersten Übersetzungsstufe Ü1 zugeordnet,
das Zahnradpaar 11/19 ist der zweiten Übersetzungsstufe Ü2 zugeordnet,
das Zahnradpaar 15/23 ist der dritten Übersetzungsstufe Ü3 zugeordnet,
das Zahnradpaar 10/18 ist der vierten Übersetzungsstufe Ü4 zugeordnet,
das Zahnradpaar 14/22 ist der fünften Übersetzungsstufe Ü5 zugeordnet,
das Zahnradpaar 12/20 ist der sechsten Übersetzungsstufe Ü6 zugeordnet,
das Zahnradpaar 16/24 ist der siebten Übersetzungsstufe Ü7 zugeordnet, und
das Zahnradpaar 9/17 mit einem Zwischenrad 44 ist der Übersetzungsstufe des- Rückwärtsgangs ÜR zugeordnet. Dabei entsprechen die Übersetzungsstufen Ü1 bis Ü7 und ÜR den bekannten Übersetzungsstufen 1 bis 7 und R eines Getriebes, die auch als Gänge bezeichnet werden.

Erkennbar ist, dass die Übersetzungsstufen einer Gruppe von Zahnradpaaren13/21 und 14/22 bzw. 15/23 und 16/24 bzw. 11/19 und 12/20, also Ü1 und Ü5 bzw. Ü3 und Ü7 bzw. Ü2 und Ü6 jeweils einen Übersetzungssprung von vier haben, also N und N+4. Bei einer Rückschaltung N zu N-2 müssen somit zwei Gruppen von Zahnradpaaren involviert werden. Beispielsweise bei einer Rückschaltung Ü3 nach Ü1 muss die Gruppe der Zahnradpaare13/21 und 14/22 als auch die Gruppe der Zahnradpaare 15/23 und 16/24 involviert werden, wobei die Schiebemuffe des Zahnradpaares 15/23 auslegend betätigt wird und die Schiebemuffe des Zahnradpaares 13/21 einlegend betätigt wird. Auch bei einem Rückschaltvorgang Ü7 nach Ü5 sind beide Gruppen der Zahnradpaare13/21 und 14/22 als auch 15/23 und 16/24 involviert.

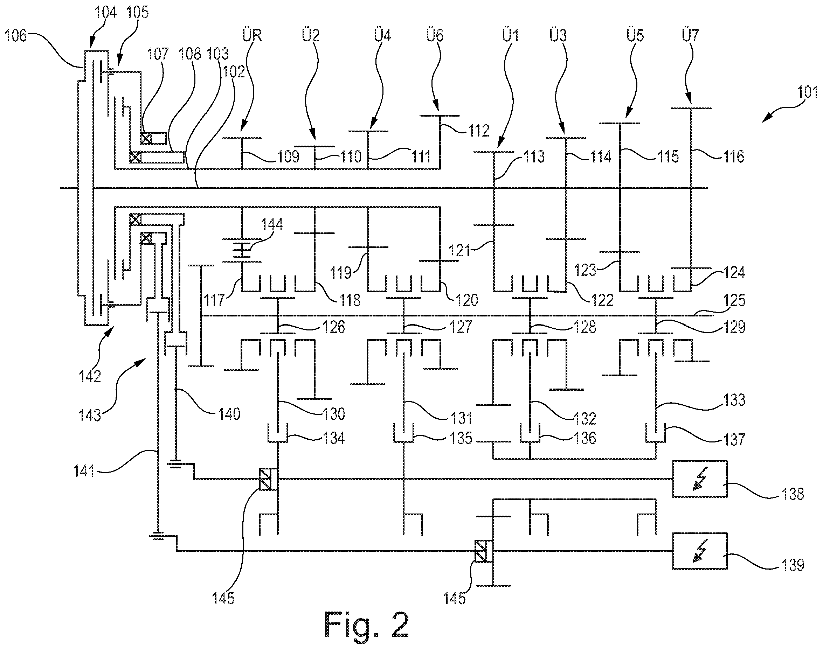

Die Figur 2 zeigt in einer schematischen Darstellung ein erfindungsgemäßes Getriebe 101. Das Getriebe 101 weist eine erste Eingangswelle 102 und eine zweite Eingangswelle 103 auf, die über die Kupplungen 104, 105 mit einer nicht dargestellten Kurbelwelle eins Antriebsmotors verbindbar sind. Die Kupplungen 104, 105 sind in einem Kupplungsgehäuse 106 angeordnet, welches mit der Kurbelwelle verbindbar ist. Zur Betätigung der Kupplungen 104, 105 sind Betätigungsvorrichtungen 107, 108 vorgesehen, welche von einer Steuereinheit ansteuerbar sind, um die eine Kupplung 104 und/oder die andere Kupplung 105 betätigen zu können.

Die Eingangswellen 102, 103 sind zumindest bereichsweise koaxial zueinander angeordnet, wobei auch die Betätigungsvorrichtungen 107, 108 bevorzugt koaxial zueinander angeordnet sind. Mit den beiden Eingangswellen 102, 103 sind Zahnräder 109, 110, 111, 112, 113, 114, 115, 116 von Zahnradpaaren 109/117; 110/118; 111/119; 112/120; 113/121; 114/122; 115/123 und 116/124 drehfest verbunden. Dabei sind die Zahnräder 109, 110, 111 und 112 mit der Welle 103 und die Zahnräder 113, 114, 115 und 116 mit der Welle 102 drehfest verbunden.

Mit der parallel zu den Eingangswellen 102, 103 angeordneten Ausgangswelle 125 sind die Zahnräder 117, 118, 119, 120, 121, 122, 123, 124 über Schiebemuffen 126, 127, 128 und 129 verbindbar. Dazu sind die Schiebemuffen 126, 127, 128 und 129 über Schaltgabeln 130, 131, 132 und 133 axial verlagerbar, wobei die Schaltgabeln 130, 131, 132 und 133 dabei in die eine oder in die andere Richtung zu verlagern sind. Die Verlagerung der Schaltgabeln 130, 131, 132 und 133 erfolgt über die Walzenelemente 134, 135, 136 und 137, wobei diese von Antriebsmotoren 138, 139, wie Elektromotoren oder hydraulische Motoren, verdreht werden können. Dabei können die Walzenelemente 134,135 bzw. 136,137 zu jeweils einer Schaltwalze zusammengefasst sein.

Auch können über die Antriebsmotoren 138, 139 Kolben 140, 141 von Kolben-Zylindereinheiten 142, 143 betätigt werden, um die Kupplungen 104, 105 betätigen zu können.

Die Anordnung der Übersetzungsstufen Ü ist dabei wie folgt:
Das Zahnradpaar 113/121 ist der ersten Übersetzungsstufe Ü1 zugeordnet,
das Zahnradpaar 110/118 ist der zweiten Übersetzungsstufe Ü2 zugeordnet,
das Zahnradpaar 114/122 ist der dritten Übersetzungsstufe Ü3 zugeordnet,
das Zahnradpaar 111/119 ist der vierten Übersetzungsstufe Ü4 zugeordnet,
das Zahnradpaar 115/123 ist der fünften Übersetzungsstufe Ü5 zugeordnet,
das Zahnradpaar 112/120 ist der sechsten Übersetzungsstufe Ü6 zugeordnet,
das Zahnradpaar 116/124 ist der siebten Übersetzungsstufe Ü7 zugeordnet, und
das Zahnradpaar 109/117 mit einem Zwischenrad 144 ist der Übersetzungsstufe des-Rückwärtsgangs ÜR zugeordnet. Dabei entsprechen die Übersetzungsstufen Ü1 bis Ü7 und ÜR den bekannten Übersetzungsstufen 1 bis 7 und R eines Getriebes, die auch als Gänge bezeichnet werden.

Erkennbar ist in Figur 2, dass die Übersetzungsstufen einer Gruppe von Zahnradpaaren 113/121 und 114/122 bzw. 115/123 und 116/124 bzw. 111/119 und 112/120, also Ü1 und Ü3 bzw. Ü5 und Ü7 bzw. Ü4 und Ü6 jeweils einen Übersetzungssprung von nur zwei haben, also N und N+2. Bei einer Rückschaltung N zu N-2 ist somit nur eine Gruppe von Zahnradpaaren involviert. Dies ermöglicht einen schnelleren Schaltvorgang, insbesondere bei Verwendung von Walzenelementen zur Betätigung. Beispielsweise ist bei einer Rückschaltung Ü3 nach Ü1 nur die Gruppe der Zahnradpaare113/121 und 114/122 involviert. Bei einer Rückschaltung Ü7 nach Ü5 ist auch nur die Gruppe der Zahnradpaare115/123 und 116/124 involviert.

Zwischen dem jeweiligen Antriebsmotor 38, 39 bzw. 138, 139 und dem Kolben ist weiterhin ein Freilauf 45 bzw. 145 vorgesehen.

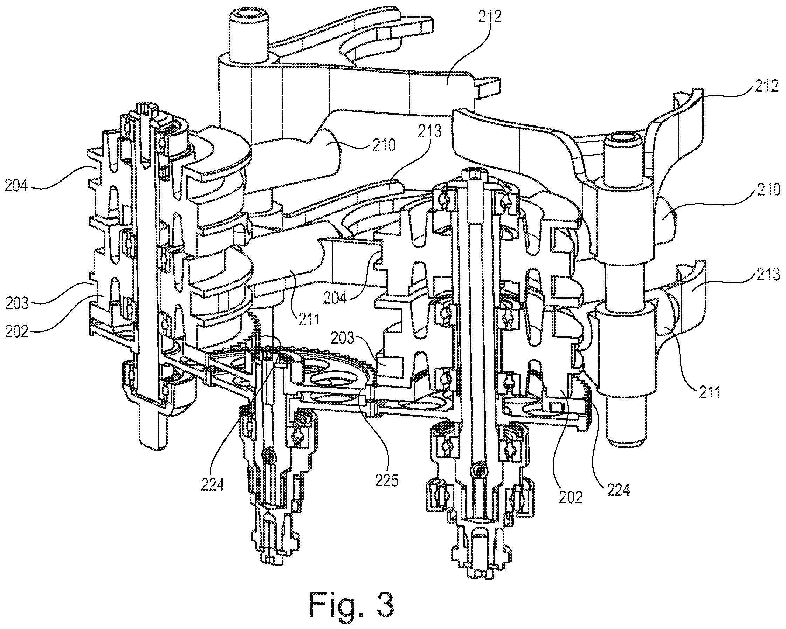

Die Figur 3 zeigt in einer Schnittdarstellung die Anordnung zweier Walzenelemente 202 mit einem Zahnrad 224 zum Antrieb über eine Antriebsstufe 225, wobei die Kontaktelemente 210, 211 der Schaltgabeln 212, 213 in die Führungsbahnen 203, 204 eingreifen und durch Verdrehung der Walzenelemente 202 in den Führungsbahnen verlagerbar sind.

So können die Zahnradpaare zumindest einer der Eingangswellen oder aller Eingangswellen paarweise mittels einer der Schaltgabeln 212,213 betätigt werden, wobei die Schaltgabeln 212,213 einer Eingangswelle jeweils mit einer Schaltwalze als Walzenelement 202 betätigt werden können. Dabei ist für die Betätigung der Zahnradpaare einer Eingangswelle jeweils eine Schaltwalze als Walzenelement 202 vorgesehen, wobei bei zwei Eingangswellen und deren zugeordnete Zahnradpaare zwei Schaltwalzen als Walzenelemente 202 vorgesehen sind zur Betätigung des Getriebes. Die Schaltwalzen als Walzenelemente 202 werden dabei bevorzugt von einem Elektromotor oder von jeweils einem Elektromotor angetrieben.

### Bezugszeichenliste

- 1: Getriebe
- 2: Eingangswelle
- 3: Eingangswelle
- 4: Kupplung
- 5: Kupplung
- 6: Kupplungsgehäuse
- 7: Betätigungsvorrichtung
- 8: Betätigungsvorrichtung
- 9: Zahnrad
- 10: Zahnrad
- 11: Zahnrad
- 12: Zahnrad
- 13: Zahnrad
- 14: Zahnrad
- 15: Zahnrad
- 16: Zahnrad
- 17: Zahnrad
- 18: Zahnrad
- 19: Zahnrad
- 20: Zahnrad
- 21: Zahnrad
- 22: Zahnrad
- 23: Zahnrad
- 24: Zahnrad
- 25: Ausgangswelle
- 26: Schiebemuffe
- 27: Schiebemuffe
- 28: Schiebemuffe
- 29: Schiebemuffe
- 30: Schaltgabel
- 31: Schaltgabel
- 32: Schaltgabel
- 33: Schaltgabel
- 34: Walzenelement
- 35: Walzenelement
- 36: Walzenelement
- 37: Walzenelement
- 38: Antriebsmotor
- 39: Antriebsmotor
- 40: Kolben
- 41: Kolben
- 42: Kolben-Zylindereinheit
- 43: Kolben-Zylindereinheit
- 44: Zwischenrad
- 45: Freilauf
- 101: Getriebe
- 102: Eingangswelle
- 103: Eingangswelle
- 104: Kupplung
- 105: Kupplung
- 106: Kupplungsgehäuse
- 107: Betätigungsvorrichtung
- 108: Betätigungsvorrichtung
- 109: Zahnrad
- 110: Zahnrad
- 111: Zahnrad
- 112: Zahnrad
- 113: Zahnrad
- 114: Zahnrad
- 115: Zahnrad
- 116: Zahnrad
- 117: Zahnrad
- 118: Zahnrad
- 119: Zahnrad
- 120: Zahnrad
- 121: Zahnrad
- 122: Zahnrad
- 123: Zahnrad
- 124: Zahnrad
- 125: Ausgangswelle
- 126: Schiebemuffe
- 127: Schiebemuffe
- 128: Schiebemuffe
- 129: Schiebemuffe
- 130: Schaltgabel
- 131: Schaltgabel
- 132: Schaltgabel
- 133: Schaltgabel
- 134: Walzenelement
- 135: Walzenelement
- 136: Walzenelement
- 137: Walzenelement
- 138: Antriebsmotor
- 139: Antriebsmotor
- 140: Kolben
- 141: Kolben
- 142: Kolben-Zylindereinheit
- 143: Kolben-Zylindereinheit
- 144: Zwischenrad
- 145: Freilauf
- 202: Walzenelement
- 203: Führungsbahn
- 204: Führungsbahn
- 210: Kontaktelement
- 211: Kontaktelement
- 212: Schaltgabel
- 213: Schaltgabel
- 224: Zahnrad
- 225: Antriebsstufe

## Patentansprüche

1. Getriebe (101) mit einer ersten Eingangswelle (102) und mit einer zweiten Eingangswelle (103), mit einer Ausgangswelle (125), mit einer ersten Kupplung (104) und mit einer zweiten Kupplung (105), wobei jede der Eingangswellen (102, 103) mit einer der Kupplungen (104, 105) mit der Kurbelwelle eines Antriebsmotors verbindbar ist, wobei jeder der Eingangswellen (102,103) mittels Zahnradpaaren (113/121,110/118,114/122,111/119,115/123,112/120,116/124,109/117) mit der Ausgangswelle (125) drehmomentübertragend verbindbar ist, wobei Gruppen von zwei Zahnradpaaren (113/121 und 114/122 bzw. 115/123 und 116/124 bzw. 111/119 und 112/120) jeweils mittels einer betätigbaren Schaltgabel (130,131,132,133) mit der Ausgangswelle (125) drehmomentübertragend verbindbar sind, wobei jedem Zahnradpaar (113/121,110/118,114/122,111/119,115/123,112/120,116/124,109/117) eine Übersetzungsstufe (ÜR, Ü1 bis Ü7) zugeordnet ist,
eine Anzahl von relativ zueinander abgestuften Übersetzungsstufen vorgesehen sind, die beiden Übersetzungsstufen einer Gruppe von Zahnradpaaren eine erste Übersetzungsstufe (N) und ihre übernächste Übersetzungsstufe (N+2) sind, mit N einer ganzen Zahl, insbesondere N = 1, 2, 3, 4 oder 5 etc,
die Übersetzungsstufen (Ü1,Ü3,Ü5,Ü7) einer Eingangswelle (102) zwei Gruppen von Zahnradpaaren (113/121 und 114/122 bzw. 115/123 und 116/124) aufweisen, wobei diese Zahnradpaare (113/121,114/122,115/123,116/124) die Übersetzungsstufen 1, 3, 5 und 7 umfassen,
die Übersetzungsstufen (Ü1,Ü3,Ü5,Ü7) einer Eingangswelle (102) zwei Gruppen von Zahnradpaaren (113/121 und 114/122 bzw. 115/123 und 116/124) aufweisen, wobei diese Zahnradpaare (113/121,114/122,115/123,116/124) die Übersetzungsstufen 1 und 3 in einer Gruppe sowie 5 und 7 in einer anderen Gruppe umfassen,
die Übersetzungsstufen (ÜR,Ü2,Ü4,Ü6) einer Eingangswelle (103) zwei Gruppen von Zahnradpaaren (111/119 und 112/120 bzw. 109/117 und 110/118) aufweisen, wobei diese Zahnradpaare (111/119,112/120,109/117,110/118) die Übersetzungsstufen 2, 4 und 6 umfassen,
die Übersetzungsstufe (ÜR) des Rückwärtsgangs R einem der Zahnradpaare (109/117 und 110/118) zugeordnet ist und
die Übersetzungsstufen (ÜR,Ü2,Ü4,Ü6) einer Eingangswelle (103) zwei Gruppen von Zahnradpaare (111/119 und 112/120 bzw. 109/117 und 110/118) aufweisen, wobei diese Zahnradpaare (111/119,112/120,109/117,110/118) die Übersetzungsstufen R und 2 in einer Gruppe sowie 4 und 6 in einer anderen Gruppe umfassen,
**dadurch gekennzeichnet, dass**
die beiden Gruppen von Zahnradpaaren (113/121 und 114/122 bzw. 115/123 und 116/124) so auf einander auf der Eingangswelle (102) folgen, dass die Übersetzungsstufen 3 und 5 benachbart sind und
die beiden Gruppen von Zahnradpaaren (111/119 und 112/120 bzw. 109/117 und 110/118) so auf einander auf der Eingangswelle (103) folgen, dass die Übersetzungsstufen 2 und 4 benachbart sind, wobei die Zahnradpaare(113/121,110/118,114/122,111/119,115/123,112/120,116/124,109/117) zumindest einer der Eingangswellen (102,103) oder aller Eingangswellen (102,103) paarweise mittels einer Schaltgabel (130,131,132,133) betätigt werden, wobei die Schaltgabeln (130,131,132,133) einer Eingangswelle (102,103) jeweils mit einer Schaltwalze (134,135,136,137) betätigt werden.

2. Getriebe nach Anspruch 1, **dadurch gekennzeichnet, dass** die Übersetzungsstufen (ÜR, Ü1 bis Ü7) einer Eingangswelle (102, 103) zwei Gruppen von Zahnradpaaren (113/121 und 114/122 bzw. 115/123 und 116/124 bzw. 109/117 und 110/118 bzw. 111/119 und 112/120) aufweisen, wobei diese Zahnradpaare (113/121,110/118,114/122,111/119,115/123,112/120,116/124,109/117) die Übersetzungsstufen N, N+2, N+4 und N+6 umfassen, mit N einer ganzen Zahl, insbesondere N = 1, 2 oder 3.

3. Getriebe nach einem der vorhergehenden Ansprüche, **dadurch gekennzeichnet, dass** für die Betätigung der Zahnradpaare (109/117,110/118,111/119,112/120,113/121,114/122,115/123,116/124) einer Eingangswelle (102,103) jeweils eine Schaltwalze (134,135,136,137) vorgesehen ist, wobei bei zwei Eingangswellen (102,103) und deren zugeordnete Zahnradpaare (109/117,110/118,111/119,112/120,113/121,114/122,115/123,116/124) zwei Schaltwalzen (134,135 bzw. 136,137) vorgesehen sind zur Betätigung des Getriebes (101).

4. Getriebe nach einem der vorhergehenden Ansprüche, **dadurch gekennzeichnet, dass** die Schaltwalzen (134,135,136,137) jeweils von einem Elektromotor (138,139) angetrieben werden.

## Claims

1. Transmission (101) having a first input shaft (102) and having a second input shaft (103), having an output shaft (125), having a first clutch (104) and having a second clutch (105), it being possible for each of the input shafts (102, 103) to be connected by way of one of the clutches (104, 105) to the crankshaft of a drive engine, it being possible for each of the input shafts (102, 103) to be connected in a torque-transmitting manner by means of gearwheel pairs (113/121, 110/118, 114/122, 111/119, 115/123, 112/120, 116/124, 109/117) to the output shaft (125), it being possible for groups of two gearwheel pairs (113/121 and 114/122, and 115/123 and 116/124, and 111/119 and 112/120) to be connected in a torque-transmitting manner in each case by means of an actuable selector fork (130, 131, 132, 133) to the output shaft (125), each gearwheel pair (113/121, 110/118, 114/122, 111/119, 115/123, 112/120, 116/124, 109/117) being assigned a transmission stage (ÜR, Ü1 to Ü7), a number of transmission stages which are stepped relative to one another being provided, the two transmission stages of one group of gearwheel pairs being a first transmission stage (N) and the next but one transmission stage (N+2), where N is an integer, in particular N = 1, 2, 3, 4 or 5, etc., the transmission stages (Ü1, Ü3, Ü5, Ü7) of an input shaft (102) having two groups of gearwheel pairs (113/121 and 114/122, and 115/123 and 116/124), said gearwheel pairs (113/121, 114/122, 115/123, 116/124) comprising the transmission stages 1, 3, 5 and 7, the transmission stages (Ü1, Ü3, Ü5, Ü7) of an input shaft (102) having two groups of gearwheel pairs (113/121 and 114/122, and 115/123 and 116/124), said gearwheel pairs (113/121, 114/122, 115/123, 116/124) comprising the transmission stages 1 and 3 in one group and 5 and 7 in another group, the transmission stages (ÜR, Ü2, Ü4, Ü6) of an input shaft (103) having two groups of gearwheel pairs (111/119 and 112/120, and 109/117 and 110/118), said gearwheel pairs (111/119, 112/120, 109/117, 110/118) comprising the transmission stages 2, 4 and 6, the transmission stage (ÜR) of the reverse gear R being assigned to one of the gearwheel pairs (109/117 and 110/118), and the transmission stages (ÜR, U2, U4, U6) of an input shaft (103) having two groups of gearwheel pairs (111/119 and 112/120, and 109/117 and 110/118), said gearwheel pairs (111/119, 112/120, 109/117, 110/118) comprising the transmission stages R and 2 in one group and 4 and 6 in another group, **characterized in that** the two groups of gearwheel pairs (113/121 and 114/122, and 115/123 and 116/124) follow one another on the input shaft (102) in such a way that the transmission stages 3 and 5 are adjacent, and the two groups of gearwheel pairs (111/119 and 112/120, and 109/117 and 110/118) follow one another on the input shaft (103) in such a way that the transmission stages 2 and 4 are adjacent, the gearwheel pairs (113/121, 110/118, 114/122, 111/119, 115/123, 112/120, 116/124, 109/117) of at least one of the input shafts (102, 103) or of all the input shafts (102, 103) being actuated in pairs by means of a selector fork (130, 131, 132, 133), the selector forks (130, 131, 132, 133) of an input shaft (102, 103) being actuated in each case by way of a shifting drum (134, 135, 136, 137).

2. Transmission according to Claim 1, **characterized in that** the transmission stages (ÜR, Ü1 to Ü7) of an input shaft (102, 103) have two groups of gearwheel pairs (113/121 and 114/122, and 115/123 and 116/124, and 109/117 and 110/118, and 111/119 and 112/120), said gearwheel pairs (113/121, 110/118, 114/122, 111/119, 115/123, 112/120, 116/124, 109/117) comprising the transmission stages N, N+2, N+4 and N+6, where N is an integer, in particular N = 1, 2 or 3.

3. Transmission according to either of the preceding claims, **characterized in that** in each case one shifting drum (134, 135, 136, 137) is provided for the actuation of the gearwheel pairs (109/117, 110/118, 111/119, 112/120, 113/121, 114/122, 115/123, 116/124) of an input shaft (102, 103), two shifting drums (134, 135, and 136, 137) being provided for actuating the transmission (101) in the case of two input shafts (102, 103) and their associated gearwheel pairs (109/117, 110/118, 111/119, 112/120, 113/121, 114/122, 115/123, 116/124).

4. Transmission according to one of the preceding claims, **characterized in that** the shifting drums (134, 135, 136, 137) are driven in each case by an electric motor (138, 139).

## Revendications

1. Transmission (101) dotée d'un premier arbre d'entrée (102) et d'un deuxième arbre d'entrée (103), dotée d'un arbre de sortie (125), dotée d'un premier embrayage (104) et d'un deuxième embrayage (105), dans laquelle chacun des arbres d'entrée (102, 103) est raccordable avec un des embrayages (104, 105) avec le vilebrequin d'un moteur d'entraînement, dans laquelle chacun des arbres d'entrée (102, 103) est raccordable à l'arbre de sortie (125) en transmission du couple au moyen de paires d'engrenages (113/121, 110/118, 114/122, 111 /119, 115/123, 112/120, 116/124, 109/117), dans laquelle des groupes de deux paires d'engrenages (113/121 et 114/122 ou 115/123 et 116/124 ou 111/119 et 112/120) sont respectivement raccordables à l'arbre de sortie (125) en transmission du couple au moyen d'une fourchette de commutation actionnable (130, 131, 132, 133), dans laquelle un étage de transmission (ÜR, Ü1 à Ü7) est ordonné à chaque paire d'engrenages (113/121, 110/118, 114/122, 111/119, 115/123, 112/120, 116/124, 109/117),
un nombre d'étages de transmission gradués l'un par rapport à l'autre est prévu, les deux étages de transmission d'un groupe d'engrenages sont un premier étage de transmission (N) et l'étage de transmission deux crans au-dessus (N+2), N étant un nombre entier, en particulier N = 1, 2, 3, 4 ou 5 etc., les étages de transmission (Ü1, Ü3, Ü5, Ü7) d'un arbre d'entrée (102) comportent deux groupes de paires d'engrenages (113/121 et 114/122 ou 115/123 et 116/124), dans laquelle ces paires d'engrenages (113/121, 114/122, 115/123, 116/124) comprennent les étages de transmission 1, 3, 5 et 7, les étages de transmission (Ü1, Ü3, Ü5, Ü7) d'un arbre d'entrée (102) comportent deux groupes de paires d'engrenages (113/121 et 114/122 ou 115/123 et 116/124), dans laquelle ces paires d'engrenages (113/121, 114/122, 115/123, 116/124) comprennent les étages de transmission 1 et 3 dans un groupe ainsi que 5 et 7 dans un autre groupe, les étages de transmission (ÜR, Ü2, Ü4, Ü6) d'un arbre d'entrée (103) comportent deux groupes de paires d'engrenages (111/119 et 112/120 ou 109/117 et 110/118), dans laquelle ces paires d'engrenages (111/119, 112/120, 109/117, 110/118) comprennent les étages de transmission 2, 4 et 6,
l'étage de transmission (ÜR) de la marche arrière R est ordonné à une des paires d'engrenages (109/117 et 110/118)
les étages de transmission (ÜR, Ü2, Ü4, Ü6) d'un arbre d'entrée (103) comportent deux groupes de paires d'engrenages (111/119 et 112/120 ou 109/117 et 110/118), dans laquelle ces paires d'engrenages (111/119, 112/120, 109/117, 110/118) comprennent les étages de transmission R et 2 dans un groupe ainsi que 4 et 6 dans un autre groupe,
**caractérisée en ce que** les deux groupes de paires d'engrenages (113/121 et 114/122 ou 115/123 et 116/124) se suivent l'un l'autre sur l'arbre d'entrée (102) de telle sorte que les étages de transmission 3 et 5 sont adjacents et
les deux groupes de paires d'engrenages (111/119 et 112/120 ou 109/117 et 110/118) se suivent l'un l'autre sur l'arbre d'entrée (103) de telle sorte que les étages de transmission 2 et 4 sont adjacents, dans laquelle les paires d'engrenages (113/121, 110/118, 114/122, 111/119, 115/123, 112/120, 116/124, 109/117) d'au moins un des arbres d'entrée (102, 103) ou de tous les arbres d'entrée (102, 103) sont actionnées par paires au moyen d'une fourchette de commutation (130, 131, 132, 133), dans laquelle les fourchettes de commutation (130, 131, 132, 133) d'un arbre d'entrée (102, 103) sont respectivement actionnées avec un tambour de sélection (134, 135, 136, 137).

2. Transmission selon la revendication 1, **caractérisée en ce que** les étages de transmission (ÜR, Ü1 à Ü7) d'un arbre d'entrée (102, 103) comportent deux groupes de paires d'engrenages (113/121 et 114/122 ou 115/123 et 116/124 ou 109/117 et 110/118 ou 111/119 et 112/120), dans laquelle ces paires d'engrenages (113/121, 110/118, 114/122, 111/119, 115/123, 112/120, 116/124, 109/117) comprennent les étages de transmission N, N+2, N+4 et N+6, N étant un nombre entier, en particulier N = 1, 2 ou 3.

3. Transmission selon l'une des revendications ci-dessus, **caractérisée en ce qu'**un tambour de sélection (134, 135, 136, 137) est respectivement prévu pour l'actionnement des paires d'engrenages (109/117, 110/118, 111/119, 112/120, 113/121, 114/122, 115/123, 116/124) d'un arbre d'entrée (102, 103), dans laquelle pour les deux arbres d'entrée (102, 103) et les paires d'engrenages qui leur sont ordonnées (109/117, 110/118, 111/119, 112/120, 113/121, 114/122, 115/123, 116/124), deux tambours de sélection (134, 135 ou 136, 137) sont prévus pour l'actionnement de la transmission (101).

4. Transmission selon l'une des revendications ci-dessus, **caractérisée en ce que** les tambours de sélection (134, 135, 136, 137) sont respectivement entraînés par un moteur électrique (138, 139).
